# EUROPEAN PATENT APPLICATION

(11) **EP 2 662 275 A2**
(43) Date of publication of application: **13.11.2013**
(21) Application number: 13163424.8
(22) Date of filing: 11.04.2013
(51) Int. Cl.: B63B 35/79, A63C 5/048, A63C 5/12

(54) **A board for water sport or snow sport and a method of manufacturing thereof**

(30) Priority: 11.04.2012 HK 12103559
(71) Applicant: Neil Pryde Limited, New Territories, Hong Kong (CN)
(72) Inventor: Kay, David, Tuen Mun, New Territories Hong Kong (CN)
(74) Representative: Stevenson-Hill, Jack Patrick

(57) **Abstract**

A board (100) for water or snow activity comprises a planar body (102) having an edge (104) joining one or more vertices (103) of the body (102), wherein the edge (104) is engaged to a rail member (106) defined by one or more flexible strips each being arranged to be sufficiently flexible so as to continuously engage with an edge (104) portion adjacent to the one or more vertices (103).

## Description

### TECHNICAL FIELD

The present invention relates to a board for water or snow sport, and particularly, although not exclusively, to a water or snow activity board having a protective rail disposed on an edge of the board.

### BACKGROUND

A number of water sports or snow activities require the uses of a board. The board is usually a planar body which is arranged to support a rider on a medium such as water, snow or ice whilst the rider is in motion. These boards have an important function of supporting the rider whilst also permitting the rider to interact with the water, snow or ice surface so as to allow the rider to perform various movements or manoeuvres whilst undertaking the water or snow activity.

Examples of these boards include kite boards, wake boards, surf boards, snow boards or the like. These boards are all useful in supporting a rider on water or snow. In the case of kite boards, for example, the rider may be supported on a kite board whilst being powered on the water's surface by a kite. In these cases, the board may be designed so that the when rider applies pressure to certain portions of the board, a change in the balance and/or a change in the water pressure underneath the board will allow the rider to perform certain types of manoeuvres.

Designers have noticed that the shape and profile of an edge of the board will affect the performance of the board in use. This is because the edge will directly interact with the water or snow on which the board is travelling on and usually acts as the starting point in which the board interact with the water or snow during a manoeuvre. In certain situations, the rider may use the edge to dig into the snow or water so as to create turbulence or friction to steer the board or to perform certain types of manoeuvres. As such, the profile of the edge is usually designed for certain types of uses or performances.

However, the leading edge of the board is also a part of the board which is most prone to damage due to collisions or rough transportation. Once damaged, the profile of the edge may be changed and these changes may affect the performance or balance of the board.

### SUMMARY OF THE INVENTION

In accordance with a first aspect of the present invention, there is provided a board for water or snow activity comprising: a planar body having an edge joining one or more vertices of the body, wherein the edge is engaged to a rail member defined by one or more flexible strips each being arranged to be sufficiently flexible so as to continuously engage with an edge portion adjacent to the one or more vertices.

In an embodiment of the first aspect, the one or more flexible strips is arranged to continuously engage with the edge of the planar body.

In an embodiment of the first aspect, the one or more flexible strips are made from a material **characterised in that** the strips are each sufficiently able to be bent to follow an outline of the one or more vertices.

In an embodiment of the first aspect, the one or more flexible strips are made from a thermoplastic.

In an embodiment of the first aspect, the thermoplastic is polyurethane.

In an embodiment of the first aspect, the rail member is defined by a single strip arranged to continuously engage with the edge of the board.

In an embodiment of the first aspect, the rail member is arranged to be engaged to the planar body by use of a bonding agent.

In an embodiment of the first aspect, the bonding agent is an adhesive.

In an embodiment of the first aspect, the board is a kite board.

In an embodiment of the first aspect, the board is a wake board.

In accordance with a second aspect of the present invention, there is provided a protective rail for protecting a water or snow activity board comprising:
one or more elongated strips each arranged to be sufficiently flexible so as to bend around an edge portion adjacent to a vertex of the water or snow activity board to continuously engage with the edge portion of the vertex.

In an embodiment of the second aspect, the one or more elongated strips is made from a thermoplastic.

In an embodiment of the second aspect, the thermoplastic is polyurethane.

In an embodiment of the second aspect, the rail is further engaged to an edge of the water or snow activity board.

In an embodiment of the second aspect, the rail is engaged with the edge of the water or snow activity board by an adhesive.

In an embodiment of the second aspect, the rail is a single elongated strip.

In accordance with a third aspect of the present invention, there is provided a method for attaching a protective rail to a water sport or snow sport board comprising the steps of:
- engaging an edge of the sports board with one or more protective strip, wherein each protective strip is sufficiently flexible so as to bend around a vertex of the board to continuously engage with an edge portion adjacent to the vertex of the board.

In an embodiment of the third aspect, the one or more protective strip is made from a thermoplastic.

In an embodiment of the third aspect, the thermoplastic is polyurethane.

In an embodiment of the third aspect, the one or more protective strip is engaged to the edge of the board with an adhesive.

### BRIEF DESCRIPTION OF THE DRAWINGS

Embodiments of the present invention will now be described, by way of example, with reference to the accompanying drawings in which:
Figure 1 is a perspective view of a board for a water activity having a protective rail in accordance with one embodiment of the present invention;
Figure 2A is an illustration of a profile cut used in the manufacturing of a board of Figure 1;
Figure 2B is an illustration of the profile cut of Figure 2A having one embodiment of a protective rail in position prior to the rails being bonded to the profile cut;
Figure 2C and 2D are illustrations of the protective rails being bonded to the profile cut;
Figure 2E is an illustration of the protective rails having been bonded to the profile cut;
Figures 3A to 3D are illustrations of the profile cut of Figure 2A being bonded with an second embodiment of a protective rail; and
Figure 3E is an illustration of the profile cut of Figure 2A being bonded with the protective rail of Figures 3A to 3D.

### DETAILED DESCRIPTION OF THE PREFERRED EMBODIMENT

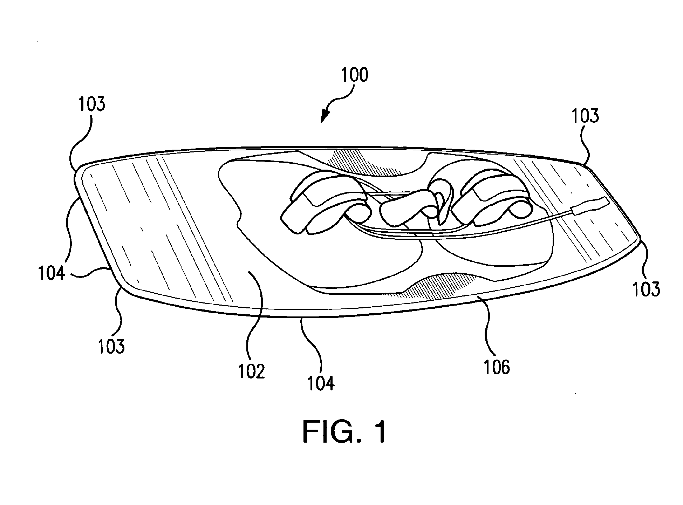

With reference to Figure 1 there is illustrated a board 100 for water activities comprising a planar body 102 having a rail member 106 arranged to substantially surround an edge 104 portion of the body 102. The board 100, as shown in Figure 1 is a kite board arranged to support a rider on a water surface whilst the rider is participating in kite surfing. As the person skilled in the art will appreciate, the board 100 may be adapted or modified to act as a wake board, surf board, body board, snow board or any other planar body arranged to support a person participating in any type of sport or activity on water or snow.

As shown in Figure 1, the board 100 is defined by a generally planar body 102 which is preferably elongated so as to provide sufficient support for the rider on the water or snow surface. The board 100 also includes a plurality of vertices 103 which form the corners of the planar body 102. These vertices 103 are preferably curved so as to form a smooth or curvy profile and in turn are advantageous in that a smooth or curvy profile may reduce friction between the board 100 and the water or snow surface.

The planar body 102 also has an edge 104 which may be arranged and shaped for performance. Preferably, this edge is relatively thin when compared with the planar body 102 so that it can be used by a rider to carve into the water or snow, and in turn manoeuvre the board 100 to a desired position. In one example, where the board 100 is adapted to operate on a water surface, the edge 104 may be shaped so as to carve into the water to create different types of turbulences around the board for user control. In examples where the board is arranged to operate on snow, the edge be even thinner as to perform allow the edge and the board to carve into snow or ice, which in turns increases the friction between the board and the snow or ice surface.

Preferably, the board 100 also include a protective rail 106 which surrounds either partially, substantially or completely encloses the edge 104 of the board. This protective rail 106 is arranged to protect the edge 104 from damage, particularly in situations where the board collides with a hard surface or object during use or transportation.

The protective rail 106 may be made from a plastic material so as to absorb much of the pressure or shock caused from collisions or rough handling. Preferably, as the rail 106 will become a leading edge of the board 100 once integrated with the board's edge 104, the rail 106 may also be arranged to be fairly hard or resilient so as to not substantially deform after an impact. This is advantageous in that a collision experienced by the protective rail 106 will not change the board's edge profile so as to affect its handling characteristics.

Depending on the function of the board and the materials used, the board 100 may be manufactured by a number of different methods with numerous different types of materials. In one example, where the material used includes wood and fibreglass, the board may be made by the following steps:
Step 1 - Obtaining a planar wooden plank (or other materials) of sufficient size;
Step 2 - Using a CNC router to cut the profile of the board 100 onto the plank to form a profile cut of the board. This may also be referred to as a CNC profile or CNC profile cut; The CNC profile includes a slot which is adjacent to the outline of the board. This slot may then be used to add a protective rail.
Step 3 - Bonding one or more protective rails within the slot. These rails may be plastic pieces which are shaped on a cutter or grinder so as to fit the edge profile of the board.
Step 4 - After the rails are bonded within the slot, the excess materials of the profile cut can then be removed and thus leaving the protective rail on the edge of the board;
Step 5 - Using the CNC router, certain features of the planar surface may be cut or carved on to the planar surface of the board;
Step 6 - Apply and bond fibreglass layers to the profile cut. This has to result of adding a layer of skin onto the board. In some examples, paint of a protective layer such as lacquer may also be applied to the surface of the board for protection;
Step 7 - Cut away excess fibreglass layers and wood (or other materials) to form the board; and
Step 8 - Apply any additional accessories to the board as desired by the rider. These accessories may include anchor points, foot rests or the like.

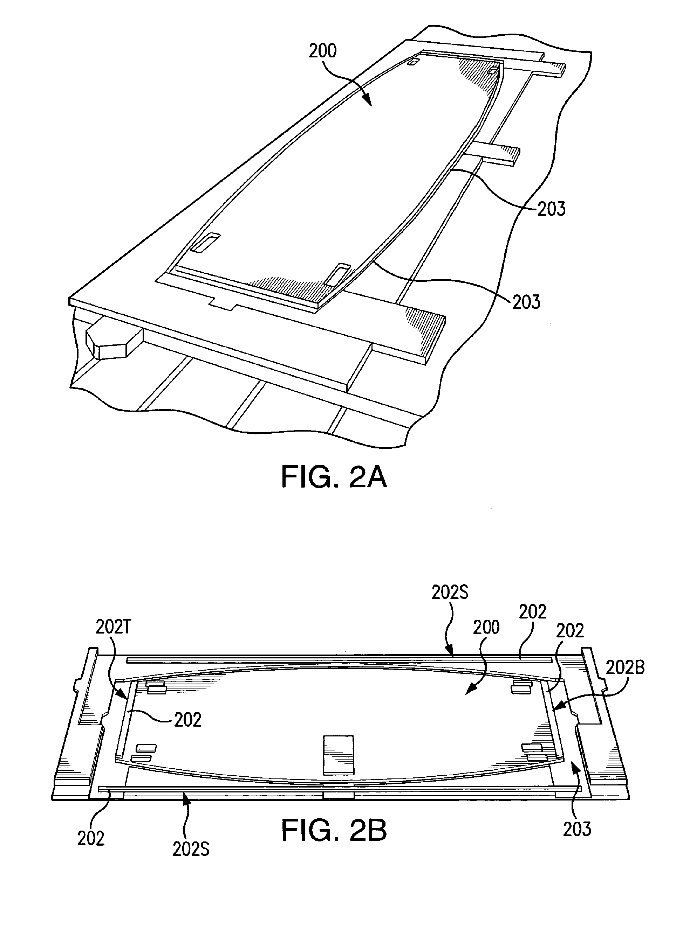

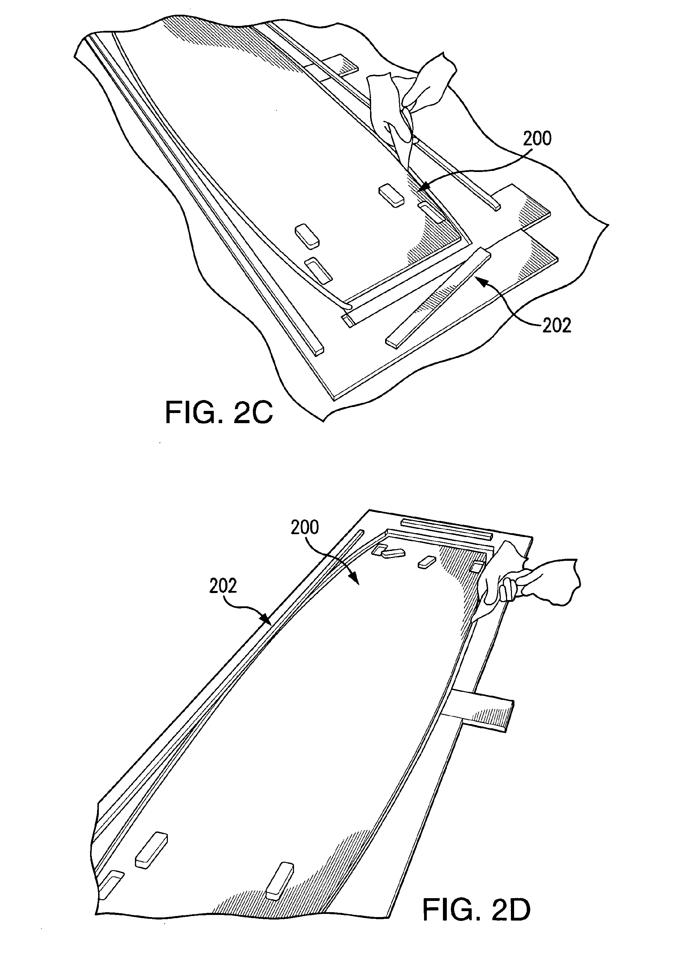

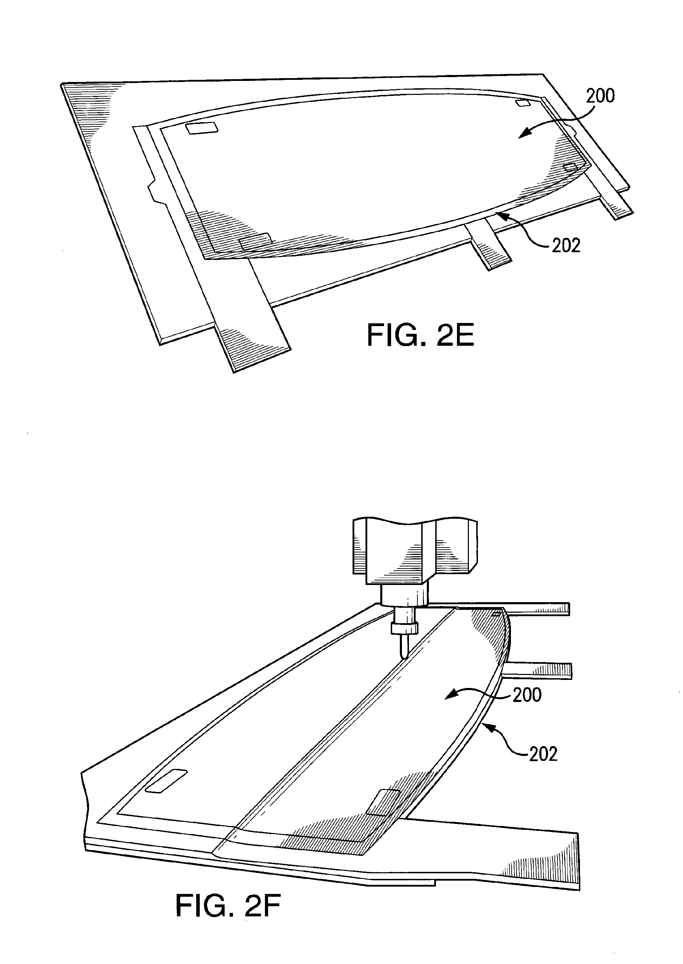

With reference to Figures 2A to 2E, there is illustrated an example of a profile cut of a kite board undergoing steps 2 to 5 mentioned above. As shown in Figure 2A, a planar plank of timber of sufficient size is cut by a Computer Numerical Control (CNC) router so that the general profile of a board 100 is cut into the timber. This creates the profile cut 200 which is subsequently cut into a finished kite board.

As show in Figure 2B, the profile cut 200 includes a slot 203 around the edge of the profile cut 200. This slot 203 defines the general outline of the finished kite board whereby the slot 203, once further processed, becomes the edge of the kite board. As illustrated in Figure 2B, protective strips 202 may then be glued to the slot 203 such that when the board is finally finished, these strips 202 protect the edge of the board.

As illustrated in Figure 2B to 2D, the protective rails 202 are formed by four strips comprising a top strip 202T, bottom strip 202B and two side strips 202S which are bonded to within the slot 203 corresponding to each side of the board.

In the example illustrated in Figures 2B to 2D, the strips are formed from a thermoplastic such as Acrylonitrile Butadiene Styrene (ABS) plastic which is mildly flexible so that straight pieces of ABS plastics can be cut into shape and flexed to generally bond to a curved portion of the slot 203 representative of the side of the board. However, as ABS plastics are generally not flexible enough to bend around a vertex of the board 100, four separate strips are used to surround the entire edge 104 of the board 100.

As shown in Figure 2E, once the strips are glued to the slots of the profile cut 200, additional primers, adhesives or bonding agents are used to ensure the edges remain in position. After the strips are engaged to the slots 203, the profile cut 200 may then be further cut by a CNC router so that excess materials are removed from the profile cut 200 to form the board 100. Once this is completed, the board 100 may then be covered and bonded with fibre glass skins, plastics, paint or lacquer.

The procedures described above is advantageous as the construction of the kite board allows the protective strips to be integrated during the construction process and thus forming a much stronger bond between the protective strips 202 and the board.

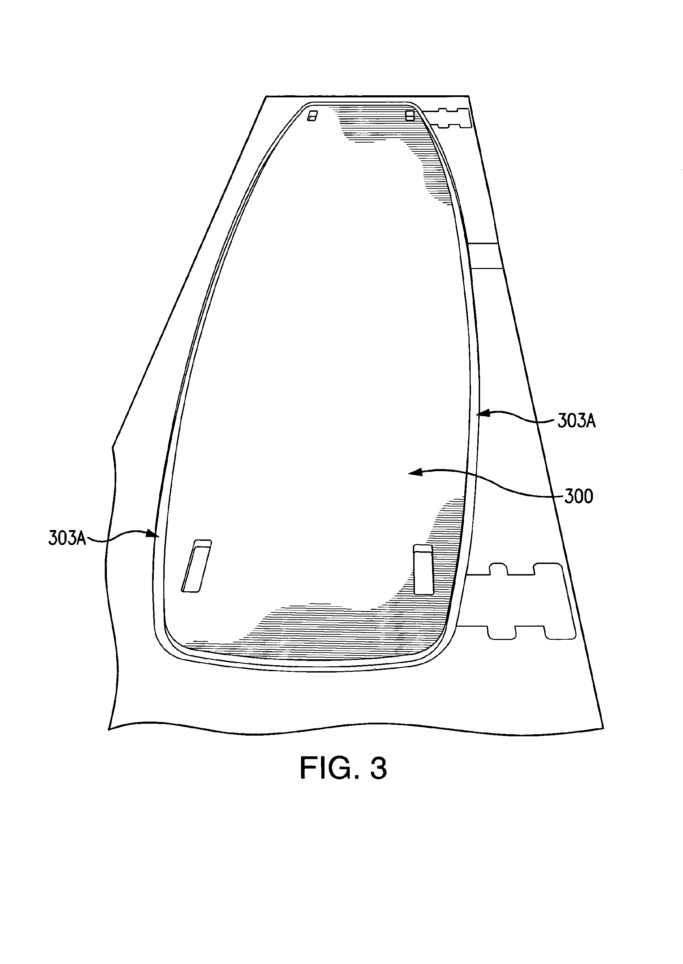

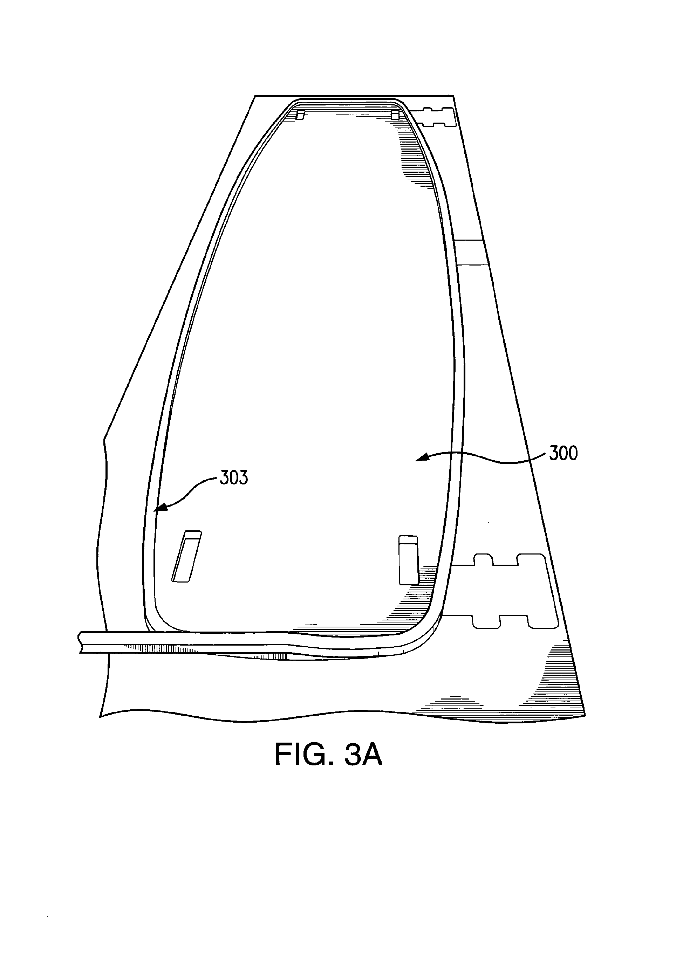

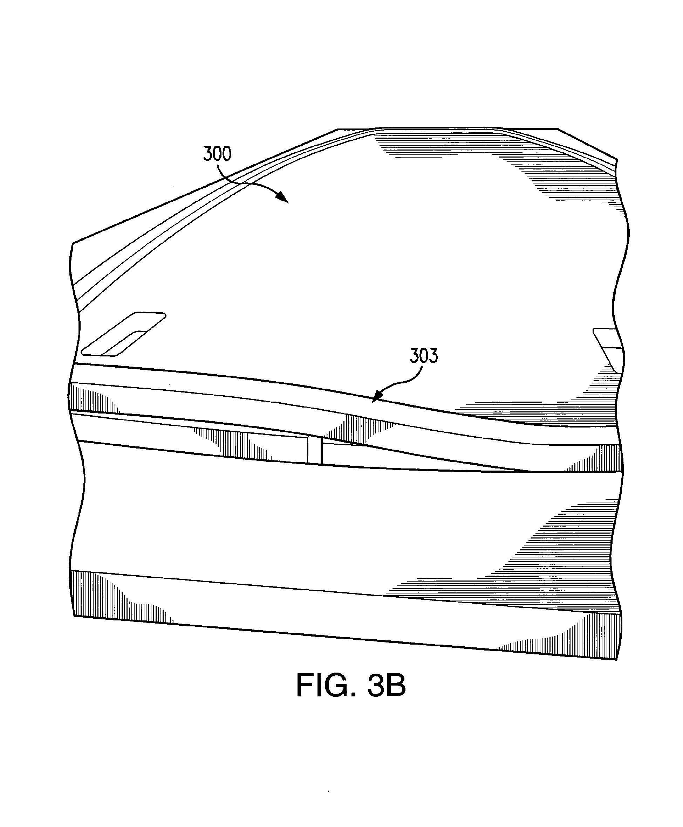

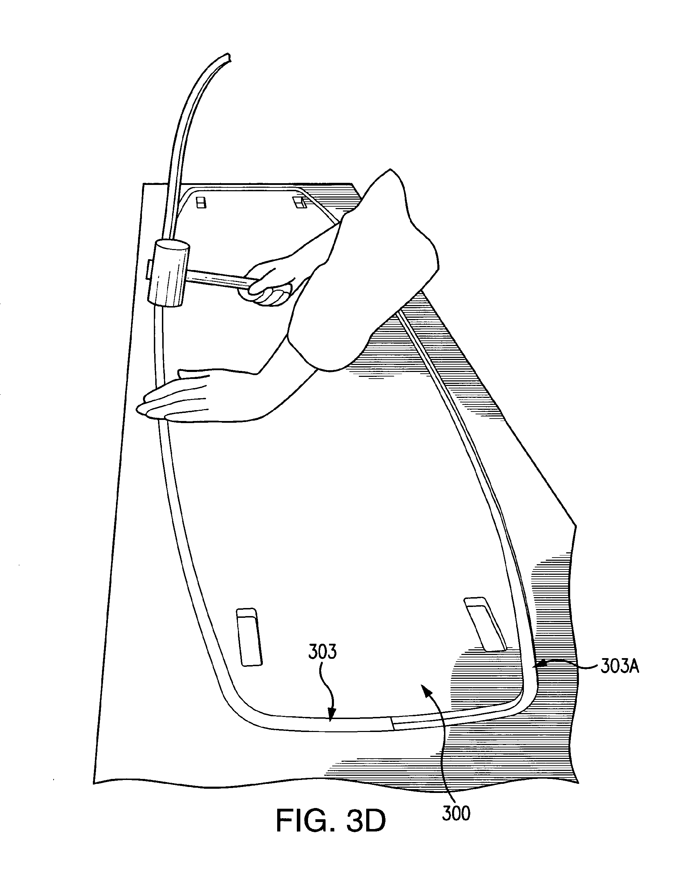

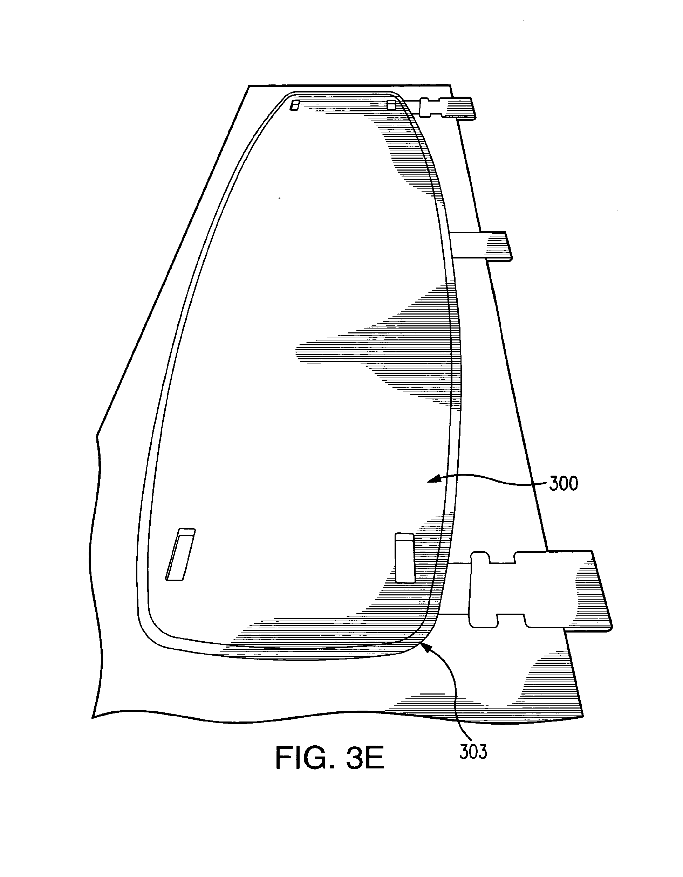

With reference to Figures 3A to 3E, there is illustrated an alterative method of manufacturing a kite board whereby an alternative procedure is used to integrate the protective rail to the kite board. As it will be appreciated by a person skilled in the art, the same procedure can be used to manufacture a board for water or snow sports such as wake boards, surf boards, body boards or snow boards.

In this embodiment, the method for manufacturing a kite board, or any board for a water sport or snow sport includes the steps of: engaging an edge of the sports board with one or more protective strip, wherein each protective strip is sufficiently flexible so as to bend around a vertex of the board to continuously engage with an edge portion adjacent to the vertex of the board.

This method of manufacturing a board, once applied, may in one example produce a water or snow activity board comprising: a planar body having an edge joining one or more vertices of the body, wherein the edge is engaged to a rail member defined by one or more flexible strips each being arranged to be sufficiently flexible so as to continuously engage with an edge portion adjacent to the one or more vertices.

In this embodiment of the method for manufacturing a kite board as shown in Figures 3A to 3E, a profile cut 300 is firstly prepared by a CNC router which cuts the board profile on to a planar plank of wood. Once the profile cut 300 is prepared, a protective rail 303, which may have been formed prior in a separate location from extruded plastic, is placed around the edge slots 303A of a profile cut 300 of the kite board and bonded to the edge slots 303A. Once bonded, the protective rail 303 will be exposed on the edge of the board after the manufacturing process finishes and thus protect the edge of the board.

As illustrated, the protective rail 303 is of a sufficient length so as to completely surround the edge of the board in one single elongated strip, although it is also possible that the protective rail can comprise more than one strip. The protective rail 303 in this example is made by extruding Polyurethane plastic through an extrusion aperture to create a long continuous strip of the Polyurethane plastic. However, various other materials can be used to make this protective rail 303 although any flexible and resilient material which allows the strip to bend around the vertices of the board whilst offering shock absorbing characteristics is preferred.

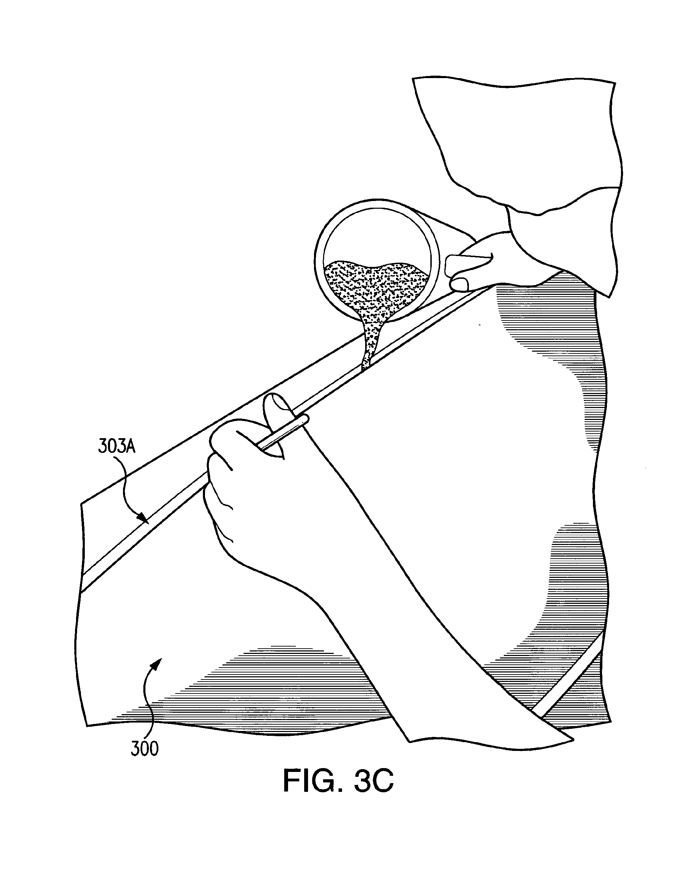

As shown in this example, the protective rail 303 has characteristics which are sufficiently flexible so as to be bended into the slots which correspond to the vertices of the board. The rail 303 is then inserted into the slot 303A and, as shown in Figure 3C, bonded to the slot such that the rail 303 is bonded to the entire edge of the board. Hammering of the rail 303 into the slot as shown in 3D may also be required as it is preferable that the rail 303 forms a snug fit into the slot 303A.

Once the bonding agent is allowed to set, the rail 303 is thus bonded to the slot 303A of the profile cut 300. The profile cut 300 may then be processed by a CNC router which will cut the shape of the board from the profile cut 300. In this process, since the rail 33 is already bonded to the slot 303A, the rail 303 will be bonded to the edge of the board and form the board's protective rail 303 after the excess materials of the profile cut 300 is cut away by the CNC router.

These embodiments are advantageous in that by using a flexible material such as polyurethane or the like, the protective rail can be bonded to the board as one continuous strip. As the material is sufficiently flexible, the strip can be continuously bonded to the vertices of a board as the strip, due to its flexibility, is able to bend to the minimum radius of the board vertices or outline. This property in turn minimises the time required to bond a protective strip to the edge of the board. Furthermore, by using more flexible materials such as polyurethane plastic to manufacture the strip, there is less wastage of materials as would be the case of harder materials with less flexibility such as ABS plastic strips which needs to be machined and cut to fit the edge of a board.

It will be appreciated by persons skilled in the art that numerous variations and/or modifications may be made to the invention as shown in the specific embodiments without departing from the spirit or scope of the invention as broadly described. The present embodiments are, therefore, to be considered in all respects as illustrative and not restrictive.

Any reference to prior art contained herein is not to be taken as an admission that the information is common general knowledge, unless otherwise indicated.

## Claims

1. A board for water or snow activity comprising:
a planar body having an edge joining one or more vertices of the body, wherein the edge is engaged to a rail member defined by one or more flexible strips each being arranged to be sufficiently flexible so as to continuously engage with an edge portion adjacent to the one or more vertices.

2. A board in accordance with claim 1,
wherein the one or more flexible strips is arranged to continuously engage with the edge of the planar body; and/or
wherein the one or more flexible strips are made from a material **characterised in that** the strips are each sufficiently able to be bent to follow an outline of the one or more vertices.

3. A board in accordance with any one of the preceding claims, wherein the one or more flexible strips are made from a thermoplastic;
and, optionally,
wherein the thermoplastic is polyurethane.

4. A board in accordance with any one of the preceding claims, wherein the rail member is defined by a single strip arranged to continuously engage with the edge of the board.

5. A board in accordance with any one of the preceding claims, wherein the rail member is arranged to be engaged to the planar body by use of a bonding agent;
and, optionally,
wherein the bonding agent is an adhesive.

6. A board in accordance with any one of the preceding claims, wherein the board is a kite board or a wake board.

7. A protective rail for protecting a water or snow activity board comprising:
one or more elongated strips each arranged to be sufficiently flexible so as to bend around an edge portion adjacent to a vertex of the water or snow activity board to continuously engage with the edge portion of the vertex.

8. A protective rail in accordance with claim 7, wherein the one or more elongated strips is made from a thermoplastic;
and, optionally,
wherein the thermoplastic is polyurethane.

9. A protective rail in accordance with either claim 7 or claim 8, wherein the rail is further engaged to an edge of the water or snow activity board;
and, optionally,
wherein the rail is engaged with the edge of the water or snow activity board by an adhesive.

10. A protective rail in accordance with any one of claims 7 to 9, wherein the rail is a single elongated strip.

11. A method for attaching a protective rail to a water sport or snow sport board comprising:
- engaging an edge of the sports board with one or more protective strip, wherein each protective strip is sufficiently flexible so as to bend around a vertex of the board to continuously engage with an edge portion adjacent to the vertex of the board.

12. A method for attaching a protective rail in accordance with claim 11, wherein the one or more protective strip is made from a thermoplastic;
and, optionally,
wherein the thermoplastic is polyurethane.

13. A method for attaching a protective rail to a sports board in accordance with either claim 11 or claim 12, wherein the one or more protective strip is engaged to the edge of the board with an adhesive.
